# EUROPEAN PATENT SPECIFICATION

(11) **EP 1 596 648 B1**
(45) Date of publication and mention of the grant of the patent: **10.10.2007**
(21) Application number: 04710913.7
(22) Date of filing: 13.02.2004
(51) Int. Cl.: A01G 5/04, A47G 7/07

(54) **DEVICE FOR USE IN FLOWER ARRANGING**
VORRICHTUNG ZUR VERWENDUNG BEI DER ANORDNUNG VON BLUMEN
DISPOSITIF DESTINE A UN AGENCEMENT FLORAL

(30) Priority: 13.02.2003 GB 0303268
(43) Date of publication of application: 23.11.2005
(73) Proprietor: Lloyd, Anne Helen, Chirk, North Wales LL14 5AT (GB)
(72) Inventor: Lloyd, Anne Helen, Chirk, North Wales LL14 5AT (GB)
(74) Representative: Hamilton, Alistair
(86) International application number: PCT/GB2004/000555
(87) International publication number: WO 2004/071171

(56) References cited:
- WO-A-03/039241
- GB-A- 1 544 630
- GB-A- 2 191 692
- US-A- 3 745 702
- US-A- 5 683 762

## Description

In the florist's trade, it is frequently necessary to hand tie arrangements of flowers, for example, to produce a hand-tied bouquet. This procedure is often laborious and time-consuming, even for an experienced florist. The procedure involves angling and turning flowers by hand in such a way as to produce a splayed-out circular shape with an even distribution of stems. The aim is to create the appearance of volume together with a pleasing overall effect. Training and experience are necessary to be able to successfully master this skill, which makes the hand-tied bouquets an expensive product. An important feature of these bouquets is that the stems of the flowers or plants included in them are gathered together and, above and below the region at which they are gathered, spread outwards. Above the gathered region, this spreading must create a pleasant arrangement of flowers and plans. Below the gathered region, the stems form a base upon which the bouquet can stand.

Various proposals exist to ease production of bouquets. Examples are shown in US-A-5 683 762, US-A-5 477 637 and US-A-1 664 436 that provide a body within which apertures are formed to receive plant stems. However, the effect has been to produce a bouquet that is splayed and open, and offers a poor resemblance to a traditional hand-tied bouquet. US-A-3 745 702 allows the creation of a flower arrangement that is considerably more random in nature than a tied bouquet.

An aim of this invention is to provide a device to enable the production of a bouquets that has the appearance of a hand-tied bouquet at reduced time and effort as compared with traditional methods.

From a first aspect, this invention provides a device for use in flower arranging as set forth in claim 1.

In use, the first axis is typically substantially vertical. The inventor has realised that the helical arrangement of the secondary apertures cause the stems of plants passed through them to adopt a helical arrangement that closely resembles the arrangement of flowers in a hand-tied bouquet.

Each secondary axis is inclined to the main axis helically. That is to say, when the first axis is vertical, each secondary axis is inclined several degrees to the vertical. More specifically, each secondary axis intersects with a line that extends normally from the principal axis. At the point of intersection, the secondary axis is tangential to a helix that is centred on the principal axis.

Some or all of the secondary apertures may be located on a circular locus centred on the first aperture. Alternatively, they may on several loci, for example concentric loci such as concentric circles, on one or more oval locus or on another shape to suit a particular application.

The device may include two or more discs spaced apart along a main axis: Each disc has several secondary apertures, the discs being rotated with respect to one another about the main axis. Each disc may have several secondary apertures, the discs being rotated with respect to one another about the main axis. A foam body is disposed between the discs to retain and support plant stems passed through it. The discs may be bonded to the foam body in a structural manner. Alternatively, the discs may be interconnected by a core, formed as an integral moulding.

In an alternative embodiment of the device, the central aperture and secondary apertures are constituted by tubular formations of a one-piece moulding. In such embodiments, the secondary tubular formations may be aligned along inclined axes. Alternatively, to facilitate manufacture, the secondary tubular formations may be aligned in parallel with the axis of the main aperture, each secondary tubular formation containing a plug, an inclined bore being formed through the plug. In such embodiments, the stems are supported within the bores.

Within one or more of the apertures, retaining means may be provided to locate the stems within the apertures. For example, these may take the form of resilient fingers that urge the stems towards the centre of the apertures.

Embodiments of the invention will now be described in detail, by way of example, and with reference to the accompanying drawings, in which:
Figure 1 is a perspective view of a first embodiment of the invention;
Figure 2 is a perspective view of a first embodiment of the invention;
Figure 3 is a perspective view of a second embodiment of the invention;
Figures 4 and 5 are plan and side views of a fourth embodiment of the invention; and
Figure 6 shows, diagrammatically, an embodiment of the invention in use.

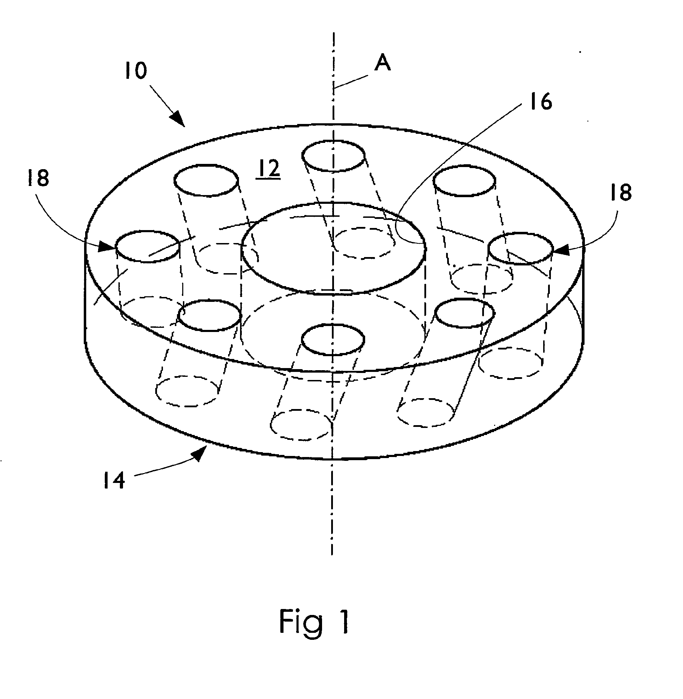

With reference to Figure 1, a first embodiment of the invention is formed as a moulding of suitable plastic material. The device is formed as an annular body 10, having parallel upper and lower surfaces 12, 14. A cylindrical first aperture 16 extends from the upper to the lower surface, through the body 10, centred and parallel to a principal axis A. The body has a circular periphery centred upon the axis A.

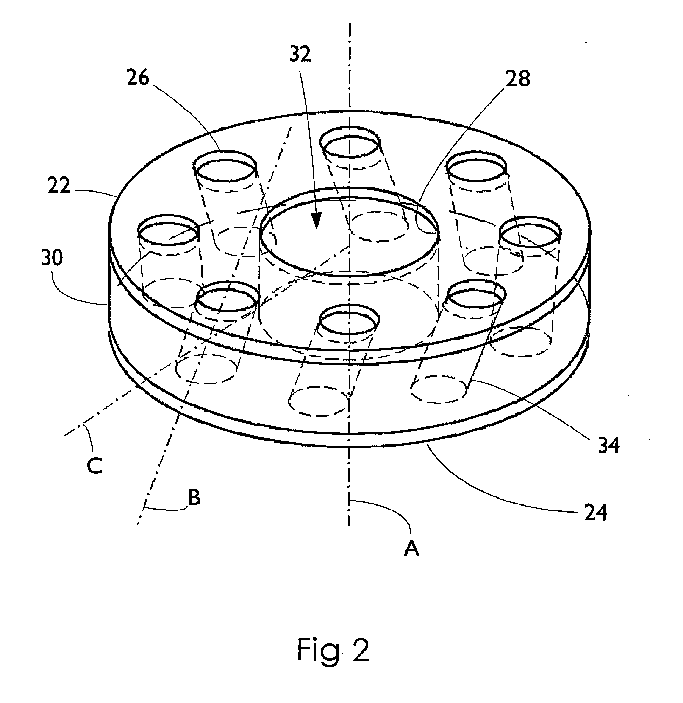

Surrounding the first aperture 16, arranged on a circular locus, are several secondary apertures 18, each extending from the upper to the lower surface. Each secondary aperture 18 has a circular cross-section. Each secondary aperture 18 is aligned on one of several parallel secondary axes B. Each of the secondary axes B is inclined to the principal axis A. The alignment of these secondary axes can be understood by way of the following constriction, described with reference to Figure 2.

Each secondary axis intersects with a line C that extends normally from the principal axis A. At the point of intersection, the secondary axis B is tangential to a helix that is centred on the principal axis A. The helix has a pitch that is many times the thickness of the body 10, such that the secondary axes are inclined at an angle of between 5° and 10° to the principal axis A. In this embodiment, the lines C are angularly equally spaced about the principal axis A and are eight in number.

An alternative way to perceive the same construction is to consider that the lower surface 14 is similar to the upper surface 12, but rotated about the principal axis A. The secondary apertures 18 interconnect holes in the upper and lower surfaces, these apertures being angled with respect to the principal axis A as a result of the rotation.

A second embodiment is shown in Figure 2. This embodiment comprises similar upper and lower annular plates 22, 24. The annular plates 22, 24 are formed from a moulded plastic material. Each plate has several circular apertures 26 formed through it, equally spaced around a circular locus centred on the main axis A, and a central circular main aperture 28. A body 30 of foam material is disposed between the plates, the plates 22, 24 being bonded to the body 30. The body 30 has an outer surface that is of substantially the same diameter as the plates 22, 24.

A main bore 32 is formed through the body 30 interconnecting the main apertures 28 of the two plates. The plates 22, 24 are arranged on the body 30 such that they are rotated with respect to one another about the central axis A by about 5°, and a respective secondary bore 34 is formed through the body to interconnect respective apertures 28 in the plates 22, 24. As can be seen from Figure 2, the effect of this is that the secondary bores have the helical arrangement as described above.

In a further low-cost embodiment, the above-described second embodiment may be modified by omitting the plates 22, 24 and providing a foam body of sufficient strength to retain the plant stems.

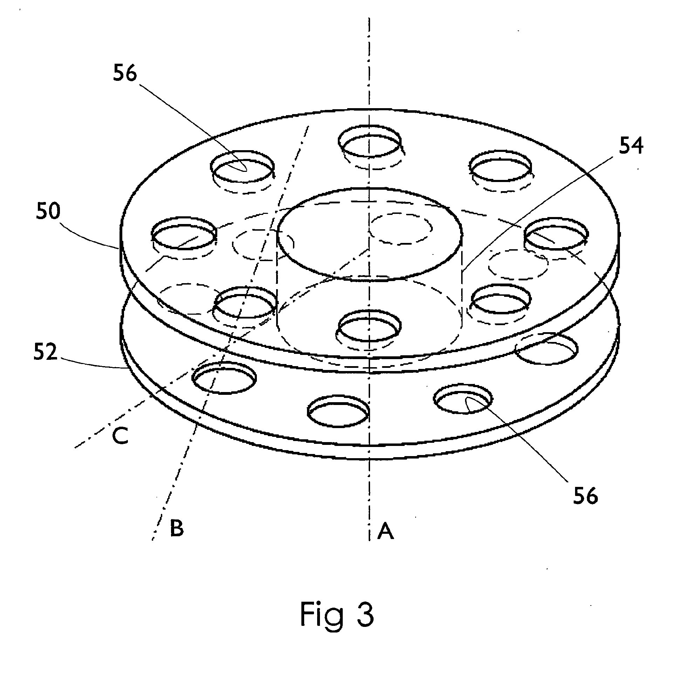

In Figure 3, a further embodiment is shown that is similar to that last previously-described. This embodiment comprises upper and lower plates 50, 52 interconnected by a core 54. The core has an axial central passage that constitutes the first aperture and holes 56 in the plates 50, 52 form the secondary apertures. As in the preceding embodiments, the secondary holes in the plates 56 are rotated with respect to one another about the principal axis A. Optionally, a filling such as foam can be introduced between the plates 50, 52.

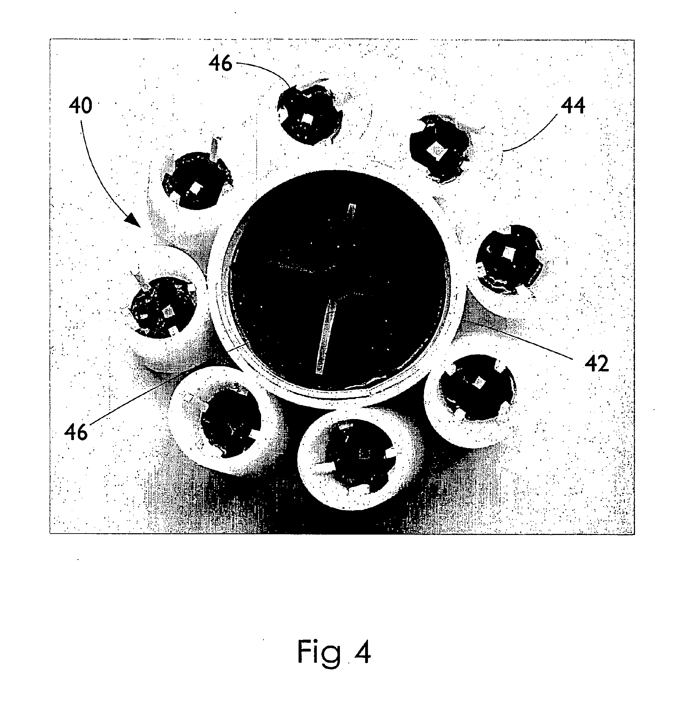

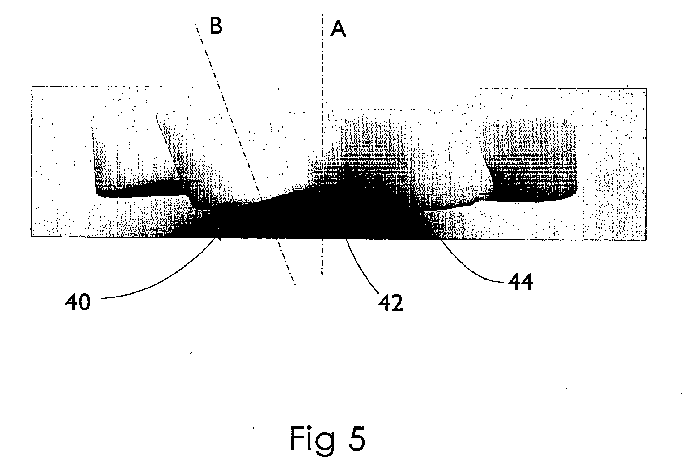

With reference now to Figures 4 and 5, a fourth embodiment of the invention is constructed in a moulded plastic body 40. The body has a central cylindrical section 42 that constitutes a main aperture through which flower stems can pass. Surrounding the central cylindrical section 42 are several tubes 44 of narrow diameter that constitute secondary aperture within which plant stems can be located. As with the above embodiments, the tubes 44 are arranged in a helical inclination as described in detail above. The body as described above can be formed as a one-piece plastic moulding.

Within each of tubes 44 and the central section there are several inwardly-directed resilient fingers 46 approximately half way along the tube. In this embodiment, the fingers are formed from flexible rubber or synthetic rubber. Alternatively, they might be formed as moulded formations integral with the tubes. Such fingers serve to retain the flower stems in position within the device.

In yet another embodiment, a moulding is provided that is similar to that described above, but with the axes of the tubes 44 parallel to the principal axis A. Each of such tubes is filled with a foam plug through which a bore is formed having a helical axis, as described above. However, the diameter of the tubes must be sufficient to allow the bores to be formed without intersecting the tube walls.

In all of the above embodiments, the secondary apertures are disposed upon a circular locus. However, this is by no means an essential feature of the invention. The secondary apertures may be on a locus of another shape (e.g., oval in the example below) or on several loci, such as on several concentric shapes.

A modification to the above-described embodiment can be made for production of a flat bouquet widely used for making funeral sprays. These bouquets differ from the hand-tied bouquets in that they have a more flattened form, the back of the arrangement being created by laying the flowers in a straight position, more flowers are then placed from both the left and right side across one another to create a triangular effect. The stems are then secured and then placed in a transparent plastic sleeve. Any of the above embodiments may be adapted to produce such a bouquet. In such cases, the first aperture has an oval shaped, and the secondary apertures are angle in a helical arrangement as before. These secondary apertures position the flowers at an angle across the main body of central flowers.

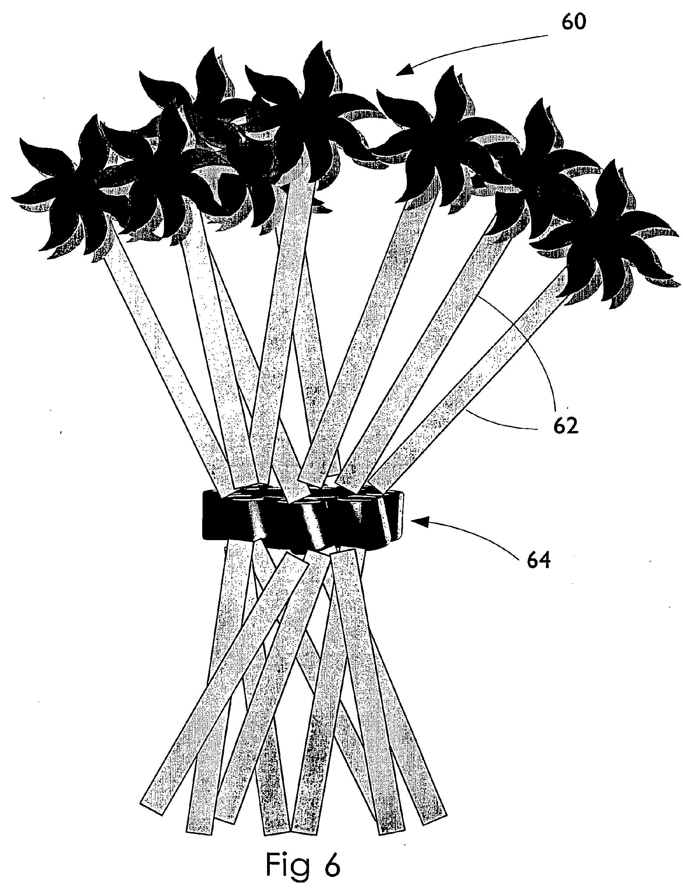

As shown in Figure 6, a bouquet can be constructed using a device embodying the invention. The illustrated example is most similar to the embodiment described above with reference to Figures 4 and 5, but the same principles apply to use of the other embodiments.

Flowers 60 are arranged with their stems 62 passing through the apertures of a device 64 embodying the invention. The greater part of the stem is above the device (that is, between the device and the flower head). Several flowers pass through the main aperture and others pass through the secondary apertures. As can be seen from Figure 6 (albeit in very simplified form), the effect is to create a pleasing arrangement above the device 64 and to produce a base formed from the lower portions of the stems below the device.

## Claims

1. A device for use in flower arranging comprising a body (10) having a lower surface (14) and an upper surface (12), the body having a first aperture (16) extending through it along a first axis (A) and several secondary apertures (18) surrounding the central aperture (16), the secondary apertures (18) each extending along a respective secondary axis (B) inclined to the first axis (A), **characterised in that** the lower surface (14) is similar to the upper surface (12) but rotated about the first axis (A) so that the secondary apertures (18) which interconnect holes in the upper and lower surfaces are angled with respect to the first axis (A) as a result of the rotation, each secondary axis (B) being aligned to be tangential to a helix centred about the first axis (A).

2. A device according to claim 1 in which some or all of the secondary apertures (18) are located on a circular locus centred on the first axis (A).

3. A device according to claim 1 in which some or all of the secondary apertures (18) are located on a plurality of loci centred on the first axis (A).

4. A device according to any preceding claim including two or more discs (22, 24) spaced apart along the first axis (A).

5. A device according to claim 4 in which each disc (22, 24) has several secondary apertures, the (22, 24) discs being rotated with respect to one another about the first axis (A).

6. A device according to claim 4 or claim 5 in which a foam body (30) is disposed between the discs (22, 24).

7. A device according to claim 6 in which the discs (22, 24) are bonded to the foam body (30).

8. A device according to any one of claims 4 to 7 in which the discs (22, 24) are interconnected by a core (54).

9. A device according to claim 8 in which the discs (22, 24) and the core (54) are formed as an integral moulding.

10. A device according to any one of claims 1 to 3 in which the central aperture and secondary apertures are constituted by tubular formations (44) of a one-piece moulding.

11. A device according to claim 10 in which each secondary tubular formation (44) contains a plug (46), an inclined bore being formed through the plug (46).

12. A device according to any preceding claim having, within one or more of the apertures, retaining means (46) to locate the stems within the apertures.

13. A device according to claim 12 in which the retaining means (46) take the form of resilient fingers that urge the stems towards the centre of the apertures.

14. A bouquet comprising a device according to any preceding claim and a plurality of plants, the plants having their stems passing through the apertures of the device.

## Patentansprüche

1. Vorrichtung zur Verwendung bei der Anordnung von Blumen, die einen Rumpf (10) mit einer unteren Fläche (14) und einer oberen Fläche (12) umfasst, wobei der Rumpf über eine erste Öffnung (16), die sich durch diesen entlang einer ersten Achse (A) erstreckt, und über mehrere sekundäre Öffnungen (18) verfügt, die um die mittige Öffnung (16) herum liegen, wobei sich die sekundären Öffnungen (18) jeweils entlang einer entsprechenden sekundären Achse (B) erstrecken, die gegenüber der ersten Achse (A) geneigt ist, **dadurch gekennzeichnet, dass** die untere Fläche (14) ähnlich der oberen Fläche (12), jedoch um die erste Achse (A) gedreht ist, so dass die sekundären Öffnungen (18), die Bohrungen in den oberen und unteren Flächen miteinander verbinden, als Ergebnis der Drehung gegenüber der ersten Achse (A) abgewinkelt sind, wobei jede sekundäre Achse (B) so ausgerichtet ist, dass sie zu einer um die erste Achse (A) zentrierten Helix tangential verlaufen.

2. Vorrichtung nach Anspruch 1, bei der einige oder alle der sekundären Öffnungen (18) sich auf einer auf der ersten Achse (A) zentrierten kreisförmigen Ortslinie befinden.

3. Vorrichtung nach Anspruch 1, bei der einige oder alle der sekundären Öffnungen (18) sich auf einer Vielzahl von auf der ersten Achse (A) zentrierten kreisförmigen Ortslinien befinden.

4. Vorrichtung nach einem der vorherigen Ansprüche, die zwei oder mehr Scheiben (22, 24) enthält, die in getrennten Abständen entlang der ersten Achse (A) angeordnet sind.

5. Vorrichtung nach Anspruch 4, bei der jede Scheibe (22, 24) über mehrere sekundäre Öffnungen verfügt, wobei die Scheiben (22, 24) gegeneinander um die erste Achse (A) gedreht sind.

6. Vorrichtung nach Anspruch 4 oder Anspruch 5, bei der ein Schaumstoffkörper (30) zwischen den Scheiben (22, 24) angeordnet ist.

7. Vorrichtung nach Anspruch 6, bei der die Scheiben (22, 24) mit dem Schaumstoffkörper (30) verbunden sind.

8. Vorrichtung nach einem der Ansprüche 4 bis 7, bei der die Scheiben (22, 24) durch einen Kern (54) miteinander verbunden sind.

9. Vorrichtung nach Anspruch 8, bei der die Scheiben (22, 24) und der Kern (54) als integrales Formteil gebildet sind.

10. Vorrichtung nach einem der Ansprüche 1 bis 3, bei der die mittige Öffnung und die sekundären Öffnungen durch rohrförmige Formationen (44) eines einteiligen Formteils gebildet sind.

11. Vorrichtung nach Anspruch 10, bei der jede sekundäre rohrförmige Formation (44) einen Zapfen (46) umfasst, wobei eine Schräglochbohrung durch den Zapfen (46) gebildet ist.

12. Vorrichtung nach einem der vorherigen Ansprüche, die innerhalb einer oder mehrerer der Öffnungen über Rückhaltemittel (46) verfügt, um die Stiele innerhalb der Öffnungen anzuordnen.

13. Vorrichtung nach Anspruch 12, bei der die Rückhaltemittel (46) die Form von elastischen Fingern annehmen, die die Stiele zum Zentrum der Öffnungen hin drängen.

14. Blumenstrauß, der eine Vorrichtung nach einem der vorherigen Ansprüche und eine Vielzahl von Pflanzen umfasst, wobei die Stiele der Pflanzen durch die Öffnungen der Vorrichtung geführt sind.

## Revendications

1. Dispositif à utiliser dans un arrangement floral comprenant un corps (10) ayant une face inférieure (14) et une face supérieure (12), le corps possédant une première ouverture (16) s'étendant à travers lui le long d'un premier axe (A) et plusieurs ouvertures secondaires (18) entourant l'ouverture centrale (16), chacune des ouvertures secondaires (18) s'étendant le long d'un axe secondaire (B) respectif incliné vers le premier axe (A), **caractérisé en ce que** la face inférieure (14) est similaire à la face supérieure (12) mais en rotation autour du premier axe (A) de façon que les ouvertures secondaires (18) qui interconnectent des trous dans les faces supérieure et inférieure soient en angle par rapport au premier axe (A) du fait de la rotation, chaque axe secondaire (B) étant aligné pour être tangentiel à une hélice centrée autour du premier axe (A).

2. Dispositif selon la revendication 1 dans lequel quelques-unes ou toutes les ouvertures secondaires (18) sont situées sur un lieu circulaire centré sur le premier axe (A).

3. Dispositif selon la revendication 1 dans lequel quelques-unes ou toutes les ouvertures secondaires (18) sont situées sur une pluralité de lieux centrés sur le premier axe (A).

4. Dispositif selon l'une quelconque des revendications précédentes comprenant deux ou plusieurs disques (22, 24) séparés le long du premier axe (A).

5. Dispositif selon la revendication 4 dans lequel chaque disque (22, 24) possède plusieurs ouvertures secondaires, les disques (22, 24) étant en rotation l'un par rapport à l'autre autour du premier axe (A).

6. Dispositif selon la revendication 4 ou la revendication 5 dans lequel un corps en mousse (30) est disposé entre les disques (22, 24).

7. Dispositif selon la revendication 6 dans lequel les disques (22, 24) sont attachés au corps en mousse (30).

8. Dispositif selon l'une quelconque des revendications 4 à 7 dans lequel les disques (22, 24) sont interconnectés par un noyau (54).

9. Dispositif selon la revendication 8 dans lequel les disques (22, 24) et le noyau (54) sont formés comme un moulage intégral.

10. Dispositif selon l'une quelconque des revendications 1 à 3 dans lequel l'ouverture centrale et les ouvertures secondaires sont constituées par des formations tubulaires (44) d'un moulage en une pièce.

11. Dispositif selon la revendication 10 dans lequel chaque formation tubulaire secondaire (44) contient un bouchon (46), un alésage incliné étant formé à travers le bouchon (46).

12. Dispositif selon l'une quelconque des revendications précédentes possédant, à l'intérieur de l'une ou de plusieurs des ouvertures, des éléments de rétention (46) pour placer les tiges à l'intérieur des ouvertures.

13. Dispositif selon la revendication 12 dans lequel les éléments de rétention (46) prennent la forme de doigts élastiques qui pressent les tiges vers le centre des ouvertures.

14. Bouquet comprenant un dispositif selon l'une quelconque des revendications précédentes et une pluralité de végétaux, les tiges de ces végétaux passant à travers les ouvertures du dispositif.
